# DEMANDE DE BREVET EUROPEEN

(11) **EP 3 675 564 A1**
(43) Date de publication de la demande: **01.07.2020**
(21) Numéro de dépôt: 19220130.9
(22) Date de dépôt: 30.12.2019
(51) Int. Cl.: H04W 52/14, H04W 52/24, H04W 88/08, H04W 92/20

(54) **STATION DE BASE D'UNE STRUCTURE MOBILE D'UN SYSTEME DE RADIOCOMMUNICATION MOBILE AVEC PUISSANCE D'EMISSION REGULEE**

(30) Priorité: 31.12.2018 FR 1874394
(71) Demandeur: Air Lynx, 91940 Les Ulis (FR)
(72) Inventeur: PISON, Laurent, 78760 Jouars Pontchartrain (FR)
(74) Mandataire: A.P.I. Conseil

(57) **Abrégé**

La présente invention propose une station de base d'une structure mobile d'un système de radiocommunication mobile avec puissance d'émission régulée. La station de base (104) d'une structure mobile (101) est capable de modifier sa puissance d'émission sur la base d'informations obtenues en lien avec une autre structure mobile (112) située dans son environnement immédiat. En particulier, une telle modification permet d'optimiser la couverture radio et de minimiser les interférences tout en conservant la possibilité d'établir une liaison de communication en mode direct (114) entre plusieurs structures mobiles.

## Description

La présente invention concerne de manière générale les systèmes de radiocommunications avec les mobiles. En particulier, elle concerne une station de base d'une structure mobile d'un système de radiocommunications mobiles avec une puissance d'émission régulée.

### [Art antérieur]

Les réseaux de télécommunications avec les mobiles, comme les réseaux cellulaires selon la norme LTE (« Long Term Evolution » selon une terminologie anglo-saxonne) définie par le consortium 3GPP et son évolution LTE-A (« Advanced LTE » selon une terminologie anglo-saxonne), permettent d'établir des communications à haut débit entre des terminaux mobiles, avec une faible latence et une tolérance élevée aux déplacements relatifs des différentes entités mobiles qui forment le réseau. L'architecture de ces réseaux repose généralement sur un ensemble de stations de base, appelées eNodeB (de l'anglais « evolved Node B ») dans la norme LTE, qui sont des nœuds de réseau fixes formant la partie radio du réseau, appelée eUTRAN dans la norme LTE, et qui établissent des communications sans fil avec des terminaux mobiles, appelés UEs (de l'anglais « User Equipements ») dans la norme LTE, via une interface radio spécifique, appelée interface Uu dans la norme LTE. La partie radio d'un réseau LTE se compose des eNodeB, d'antennes locales ou distantes, de liaisons par fibres optiques vers les antennes distantes (liens par exemple de type CPRI (pour « Common Protocol Radio Interface »)) et des liaisons IP (pour « Internet Protocol » selon une terminologie anglo-saxonne) reliant les eNodeB entre eux (interface X2) et avec le cœur de réseau (interface S1) via un réseau de backhaul.

La norme LTE est compatible avec le concept de cellule mobile, suivant lequel une station de base peut elle-même être mobile, comme étant installée dans une structure mobile (par exemple un véhicule de pompiers, ou un véhicule de type « command-car » des forces de sécurité, par exemple), afin de pouvoir projeter en tout lieu d'un territoire une cellule LTE capable de servir un groupe de terminaux mobiles LTE utilisés par les agents des forces de police, des pompiers, etc.

Un cas d'usage typique dans lequel les stations de base sont mobiles est celui du domaine naval. Dans ce domaine, les structures mobiles sont par exemple des navires qui sont eux-mêmes équipés d'au moins une station de base et d'au moins un terminal de communication mobile. La station de base sert de nœud de réseau embarqué, et permet les échanges de données entre le cœur du réseau et les terminaux mobiles qui sont sous sa couverture radio. La zone géographique ainsi desservie par la station de base couvre les espaces à bord du navire, et une certaine zone autour du navire également.

Ainsi, dans ce contexte, au moins deux structures mobiles peuvent se retrouver à une distance l'une de l'autre suffisamment proche pour permettre à certains de leurs équipements radio, et en particulier, à des équipements d'utilisateur dédiés, de communiquer ensemble. Cette distance est définie par la puissance d'émission respective de chacun des équipements radio destinés à établir des liaisons de communication. Or, chaque station de base dessert une zone géographique définie par l'étendue de sa couverture radio (i.e. une zone de couverture radio, ou cellule), dans laquelle des liaisons de communication radio cellulaire sont établies entre ladite station de base et des terminaux mobiles respectifs. De plus, chaque zone de couverture radio d'une station de base donnée est susceptible de se recouvrir partiellement ou totalement avec une zone de couverture radio d'une autre station de base, du fait de la mobilité de tout ou partie des stations de base du système. Ceci peut donner lieu à des interférences entre des liaisons de communication radio établies par une station de base, et celles établies par l'autre station de base potentiellement sur les mêmes bandes de fréquence.

D'une manière plus générale, dès lors que des stations de base sont implantées sur des structures mobiles, leurs zones de couverture radio respectives sont susceptibles de se recouvrir et donc il est souhaitable de prévoir des moyens pour éviter des interférences (i.e. des perturbations) entre les liaisons de communication radio respectivement établies par ces stations de base. En outre, le problème est d'autant plus complexe qu'un compromis doit être trouvé entre que le fait qu'on cherche à établir des liaisons de communication entre différentes structures mobiles qui se trouvent à portée radio l'une de l'autre, d'un côté, et le fait qu'on cherche à prévenir les risques d'interférence dus au fait que les zones de couverture radio des stations de base de ces structures mobiles se recouvrent.

### [Problème technique]

L'invention a pour but de remédier aux inconvénients de l'art antérieur. En particulier, l'invention a pour but de proposer une station de base d'une structure mobile étant capable d'adapter sa puissance d'émission de façon à réduire les interférences causées par d'autre stations de base. Elle a aussi our but de proposer une station de base capable d'adapter la puissance d'émission des stations de base dans une situation où les différentes structures mobiles sont reliées entre elles par une liaison de communication de type mode direct.

En outre, l'invention a pour but de proposer un procédé de régulation de la puissance d'émission d'une station de base d'une structure mobile d'un système de radiocommunication mobile.

### [Brève description de l'invention]

A cet effet, un premier aspect de l'invention propose une station de base d'une structure mobile d'un système de radiocommunication mobile, ladite station de base étant adaptée pour établir des liaisons de communication cellulaire avec des terminaux de communication mobiles de la structure mobile via une interface radio déterminée,
ladite structure mobile comprenant en outre une entité de liaison configurée pour établir au moins une liaison en mode direct avec au moins une autre entité de liaison d'une autre structure mobile du système de radiocommunication mobile via une interface radio distincte de l'interface radio utilisée pour les liaisons de communication cellulaire de la station de base, et,
ladite station de base étant en outre configurée pour :
- recevoir une ou plusieurs informations dont au moins une information déterminée par l'entité de liaison et/ou par l'autre entité de liaison, ladite ou lesdites informations étant associées à au moins un paramètre caractéristique du système de radiocommunication mobile ; et,
- adapter sa puissance d'émission sur la base de l'information ou des informations reçues.

L'invention permet ainsi de réguler la puissance d'émission de stations de base de structures mobiles situées dans l'environnement immédiat les unes des autres de manière à réduire les interférences dans la zone de recouvrement entre les zones de couverture radio respectives de chaque station de base, tout en optimisant le zone de couverture radio totale desservie par les différentes stations de base concernées. En outre, elle permet aussi d'adapter la puissance d'émission des stations de base dans une situation où les différentes structures mobiles sont reliées entre elles par une liaison de communication de type en mode direct.

Autrement dit, l'invention porte sur un système de radiocommunication mobile comportant une station de base d'une structure mobile, ladite station de base étant adaptée pour établir des liaisons de communication cellulaire avec des terminaux de communication mobiles de la structure mobile via une interface radio déterminée,
ladite structure mobile comprenant en outre une entité de liaison configurée pour établir au moins une liaison en mode direct avec au moins une autre entité de liaison d'une autre structure mobile du système de radiocommunication mobile via une interface radio distincte de l'interface radio utilisée pour les liaisons de communication cellulaire de la station de base, et,
ladite station de base étant en outre configurée pour :
- recevoir une ou plusieurs informations dont au moins une information déterminée par l'entité de liaison et/ou par l'autre entité de liaison, ladite ou lesdites informations étant associées à au moins un paramètre caractéristique du système de radiocommunication mobile ; et,
- adapter sa puissance d'émission sur la base de l'information ou des informations reçues

Selon d'autres caractéristiques optionnelles de la station de base ou du système de radiocommunication mobile :
- une information déterminée par l'entité de liaison et/ou par l'autre entité de liaison est comprise dans la liste suivante :
   ∘ une information représentative de la distance entre la structure mobile à laquelle appartient la station de base et une autre structure mobile ;
   ∘ une information représentative de la puissance d'émission de l'entité de liaison de la structure mobile à laquelle appartient la station de base et la puissance d'émission d'une autre entité de liaison d'une autre structure mobile avec laquelle une liaison en mode direct est établie ;
   ∘ une information représentative de la puissance d'émission moyenne estimée, adaptée pour obtenir une zone de recouvrement d'étendue déterminée entre des zones de couverture radio respectives de la station de base de la structure mobile et d'une station de base d'une autre structure mobile avec laquelle une liaison en mode direct est établie ; et,
   une information représentative de la puissance d'émission de la station de base de la structure mobile et la puissance d'émission d'une station de base d'une autre structure mobile située dans l'environnement immédiat de ladite station de base de la structure mobile. Ces caractéristiques permettent avantageusement d'adapter la puissance des entités de liaison notamment en fonction des données à transmettre ou encore en fonction de la distance sur laquelle de telles données doivent être transmises, et de gérer les interférences potentielles avec chacun des eNobeB associés. En outre, lorsque des entités de liaison participant à une liaison en mode directe sont impliqués, la station de base selon l'invention est particulièrement pertinente car elle permet aux entités de liaisons d'adapter leur puissance notamment quand ils utilisent la même chaine radio que le eNodeb local.
- l'information représentative de la distance entre la structure mobile à laquelle appartient la station de base et une autre structure mobile est déterminée par l'entité de liaison de la structure mobile sur la base du temps de déplacement du signal aller-retour (en anglais « Round Trip Time », RTT), mesuré entre les entités de liaison respectives de la structure mobile et de l'autre structure mobile, et est transmise à la station de base de la structure mobile par ladite entité de liaison. Ce temps de déplacement peut être mesuré en temps applicatif ou IP Protocol (on parle de RTT) ou en temps radio type TA (pour « timing alignement » en terminologie anglosaxonne).
- l'information représentative de la puissance d'émission de l'entité de liaison de la structure mobile à laquelle appartient la station de base et la puissance d'émission d'une autre entité de liaison d'une autre structure mobile avec laquelle une liaison en mode direct est établie, est déterminée par l'entité de liaison de la structure mobile, et est transmise à la station de base de la structure mobile par ladite entité de liaison.
- l'information représentative de la puissance d'émission moyenne estimée, adaptée pour obtenir une zone de recouvrement d'étendue déterminée entre les zones de couverture radio respectives de la station de base de la structure mobile et d'une station de base d'une autre structure mobile avec laquelle une liaison en mode direct est établie, inférieure à une dimension déterminée, est déterminée par l'entité de liaison de la structure mobile, et est transmise à la station de base de la structure mobile par ladite entité de liaison.
- lorsqu'une liaison IP est établie via une interface X2 entre la station de base de la structure mobile et une autre station de base d'une autre structure mobile située dans son environnement immédiat, l'information représentative de la puissance d'émission des stations de base respectives de chacune des deux structures mobiles est déterminée par au moins un terminal de communication mobile de la structure mobile et transmise à la station de base de la structure mobile par ledit terminal de communication mobile.
- l'information représentative de la puissance d'émission de la station de base et la puissance d'émission d'une autre station de base située dans son environnement immédiat sont déterminées par un dispositif de type scanner radio intégré à la structure mobile et transmise à la station de base de la structure mobile par ledit dispositif de type scanner radio. Cela permet avantageusement d'optimiser la transmission de données en minimisant les risques d'interférences entre une pluralité de stations de base.
- une modification de la puissance d'émission de ladite station de base sur la base d'une information associée à au moins un paramètre caractéristique du système de radiocommunication mobile est comprise parmi :
   ∘ une augmentation de la puissance d'émission de la station de base adaptée pour obtenir une étendue déterminée d'une zone de recouvrement entre les zones de couverture radio respectives de la station de base de la structure mobile et de la station de base de l'autre structure mobile située dans son environnement immédiat lorsque la distance comprise entre les deux structures mobiles augmente,
   ∘ une diminution de la puissance d'émission de la station de base adaptée pour obtenir une étendue déterminée d'une zone de recouvrement entre des zones de couverture radio respectives de la station de base de la structure mobile et d'une autre station de base d'une autre structure mobile située dans son environnement immédiat lorsque la distance comprise entre les deux structures mobiles diminue.
- une entité de liaison d'une structure mobile comprend des ressources logicielles mises en oeuvre dans la station de base de ladite structure mobile, ainsi que des ressources matérielles de ladite station de base.
- une structure mobile est un véhicule d'une flotte de véhicules équipés chacun d'une station de base et d'une entité de liaison conforme à l'invention.

Selon un autre aspect, l'invention porte sur un procédé de régulation de la puissance d'émission d'une station de base d'une structure mobile d'un système de radiocommunication mobile, ladite station de base étant adaptée pour établir des liaisons de communication cellulaire avec des terminaux de communication mobiles de la structure mobile via une interface radio déterminée,
ladite structure mobile comprenant en outre une entité de liaison configurée pour établir au moins une liaison en mode direct avec au moins une autre entité de liaison d'une autre structure mobile du système de radiocommunication mobile via une interface radio distincte de l'interface radio utilisée pour les liaisons de communication cellulaire de la station de base,
ledit procédé comprenant les étapes de :
- réception, par la station de base de la structure mobile, d'une ou plusieurs informations associées dont au moins une information déterminée par l'entité de liaison et/ou par l'autre entité de liaison, ladite ou lesdites informations étant associées à au moins un paramètre caractéristique du système de radiocommunication mobile ; et,
- modification, par la station de base de la structure mobile, de sa puissance d'émission sur la base de l'information ou des informations reçues.

D'autres avantages et caractéristiques de l'invention apparaitront à la lecture de la description suivante donnée à titre d'exemple illustratif et non limitatif, en référence aux figures des dessins annexés dans lesquels :
**[****Fig. 1****]** est un schéma fonctionnel illustrant un mode de réalisation d'une station de base d'une structure mobile d'un système de radiocommunication mobile selon l'invention ;
**[****Fig. 2****]** est un diagramme d'étapes d'un mode de mise en œuvre du procédé selon l'invention.

### [Description de l'invention]

Dans la description qui suit, les termes « structure mobile » désignent une entité qui comprend des moyens de communications cellulaire avec des terminaux d'utilisateur appartenant à la structure mobile. La structure est mobile, c'est-à-dire qu'elle peut être en mouvement, stationnaire (i.e., immobile) ou nomade (i.e., alternant des phases de mobilité et des phases stationnaires). Les structures mobiles peuvent correspondre, plus généralement, à toute infrastructure fixe terrestre et/ou navale, c'est-à-dire ne disposant pas de moyens matériels adaptés pour se mouvoir, ou encore à toute structure mobile terrestre et/ou navale disposant de moyens adaptés pour se mettre en mouvement, stationnaire (i.e., immobile) ou nomade (i.e., alternant des phases de mobilité et des phases stationnaires). Avantageusement, les structures mobiles selon l'invention ne sont pas connectées par des liaisons filaires.

Le terme « direct » utilisé de manière générale en référence à des modes de communication entre deux entités, signifie qu'aucune entité intermédiaire n'intervient dans ces communications pour le transport de données entre l'entité émettrice et l'entité réceptrice. Lorsqu'il est utilisé de manière particulière en référence à un mode de communication entre des structures mobiles telles que définies ci-dessus, le terme « direct » signifie que le transport de données entre deux structures mobiles se fait sans l'intervention du cœur de réseau par l'intermédiaire duquel ces structures mobiles établissent normalement leurs communications.

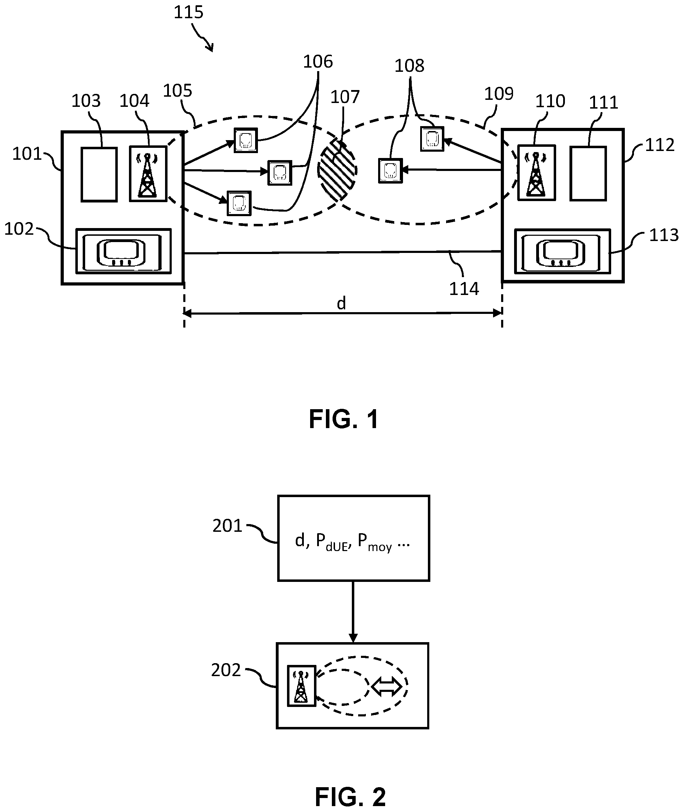

En référence au schéma de **la** **figure 1**, il va tout d'abord être décrit un mode de réalisation d'un système de radiocommunication mobile ayant des structures mobiles selon l'invention.

Dans l'exemple représenté à la figure 1, les structures mobiles 101 et 112 sont équipées chacune d'une station de base 104 et 110, respectivement, comme par exemple les entités appelées eNodeB (de l'anglais « *evolved Node B* ») dans le contexte des systèmes LTE. Elles sont par ailleurs équipées chacune d'une entité de commande 103 et 111, respectivement, et d"une entité de liaison 102 et 113, respectivement, comme par exemple un terminal appelé dUE (mis pour «*dedicated User Equipment*» en anglais) spécifiquement dédié à l'établissement d'au moins une liaison en mode direct reliant les structures mobiles 101 et 112, respectivement. En outre, l'ensemble formé par les deux structures mobiles 101 et 112 constitue un système dit de radiocommunication mobile 115. De plus, l'homme du métier appréciera que, de manière plus générale, l'invention s'applique à un tel système de radiocommunication mobile formé par un nombre de structure mobile qui peut être supérieur ou égal à deux, ayant chacun plus d'une station de base et/ou plus d'un équipements d'utilisateur dédié. Enfin, dans un mode de réalisation particulier, une structure mobile peut être un navire d'une flottille de navires qui sont chacun équipés d'une station de base et d'une entité de liaison.

La cellule 105 est desservie par la station de base 104 et comprend les terminaux de communication mobiles 106 alors que la cellule 109 est desservie par la station de base 110, et comprend les terminaux de communication mobiles 108. Pour des raisons de lisibilité, les deux cellules représentées à la figure 1 et respectivement associées à la station de base 104 et à la station de base 110, ne comprennent respectivement que trois et deux terminaux de communication mobiles. L'homme du métier appréciera néanmoins que le nombre de terminaux mobiles présents dans chaque cellule peut évidemment être supérieur ou inférieur à ces valeurs particulières.

En outre, l'homme du métier appréciera que, dans des modes de réalisation particulier de l'invention, une station de base comporte plusieurs antennes d'émission/réception de signaux radiofréquence qui forment son système antennaire. Dans l'exemple considéré ici, chacune des antennes du système antennaire de chaque station de base dessert une zone de couverture radio (i.e. une cellule), qui lui est propre. En particulier, les antennes d'un tel système antennaire sont en général des antennes directives et leurs zones de couverture radio respectives sont des secteurs angulaires de la zone de couverture radio totale de la station de base, aussi appelés secteurs antennaires. Par exemple, le système antennaire de compose de quatre antennes couvrant chacune un secteur angulaire de 90°. Ainsi, les différents terminaux de communication mobiles, situés dans la zone de couverture radio d'une station de base, établissent une liaison de communications cellulaire spécifiquement avec l'antenne du système antennaire qui couvre le secteur angulaire précis dans lequel ils se trouvent.

Au sein des cellules 105 et 109, les communications radio établies utilisent un spectre de fréquence déterminé, comme par exemple un spectre de fréquence défini par la norme LTE du consortium 3GPP. De plus, chaque station de base utilise une interface radio déterminée, comme par exemple une interface radio LTE-Uu, pour l'établissement de liaisons communication cellulaire avec l'ensemble des UEs qui sont présents dans la cellule qu'elle dessert.

Les entités de commande 103 et 111 gèrent et pilotent l'utilisation des ressources radio faites par chaque station de base évoluée. Par exemple, chaque entité de commande peut allouer tout ou partie des ressources radio associées à un spectre de fréquence à une ou plusieurs liaisons de communication cellulaire d'une station de base. Dans des modes de réalisation particulier, ces entités de commande peuvent être intégrées à la station de base de la structure mobile à laquelle elles appartiennent.

Enfin, outre les entités déjà mentionnées qui sont intégrées aux structures mobiles 101 et 112, celles-ci intègrent aussi des équipements d'utilisateur dédiés ou dUEs. Comme il a déjà été évoqué plus haut, les dUEs permettent d'établir des liaisons directes de type backhaul entre deux structures mobiles. Plus précisément, il s'agit de liens en mode direct, c'est-à-dire sans intermédiaire. Dans l'exemple représenté à la figure 1, l'entité de liaison 102 de la structure mobile 101 a établi une telle liaison en mode direct 114 avec l'entité de liaison 113 de la structure mobile 112.

Dans les différents modes de réalisation d'une station de base selon l'invention, les entités de liaison dUE peuvent être des entités virtuelles ou physiques qui utilisent tout ou partie des ressources logicielles et matérielles de la station de base de la structure mobile à laquelle elles appartiennent. Par exemple, une chaîne radio, un mat, une antenne ou une unité de traitement de la station de base de la structure mobile peuvent être utilisés par l'entité de liaison de ladite structure mobile pour la réalisation de toutes ses opérations de communication.

Dans les modes de réalisation de l'invention, la station de base 104 est configurée pour recevoir une information associée à au moins un paramètre caractéristique du système de radiocommunication mobile. Les termes « paramètre caractéristique » désignent une pluralité de paramètres associés à un ou plusieurs éléments qui composent le système de radiocommunication mobile.

Par exemple, un paramètre caractéristique du système de radiocommunication mobile représenté dans la figure 1 est celui de la distance d qui sépare la structure mobile 101 de la structure mobile 112. En effet, les entités de liaison 102 et 113 qui sont reliées entre elles par une liaison en mode direct 114 sont capables de déterminer la distance d qui les sépare et qui peut être assimilée à la distance inter-structures mobiles. En particulier, une telle détermination peut s'appuyer sur la mesure du temps de vol aller-retour ou RTT (de l'anglais « *Round Trip Time »)*, c'est-à-dire sur la mesure du temps que met un signal à faire un aller-retour entre les deux entités de liaison. Une telle mesure peut ainsi être réalisée par l'une ou l'autre des entités de liaison et transmise ensuite à la station de base 104 par ladite entité de liaison.

Un autre exemple de paramètre caractéristique du système de radiocommunication mobile est la puissance d'émission, respectivement P_{dUE1} et P_{dUE2} de chacune des entités de liaison 102 et 113 entres lesquelles une liaison en mode direct est établie. Cette puissance est en effet connue des entités de liaison elles-mêmes et peut donc être transmise à la station de base 104 par les entités de liaison. En supposant que les entités de liaison implémentent un mécanisme de contrôle de puissance pour la liaison en mode direct 114, alors les puissances d'émission P_{dUE1} et P_{dUE2} de la structure mobile 101 et de la structure mobile 112, respectivement, sont représentatives de la distance d qui sépare ces deux structures mobiles.

Un autre exemple encore de paramètre caractéristique du système de radiocommunication mobile est la puissance d'émission moyenne estimée P_{moy} qui est adaptée pour obtenir une zone de recouvrement entre des zones de couverture radio respectives des stations de base 104 et 110 ayant une dimension déterminée. Là encore, une telle estimation peut être réalisée par l'une des entités de liaison qui sont liées entres-elles par une liaison en mode direct, et être ensuite transmise à la station de base par ladite entité de liaison. Dans l'exemple représenté à la figure 1, les zones de couverture radio 105 et 109, desservies par les stations de base 104 et 110, respectivement, ont une zone de recouvrement 107 aux dimensions non-nulles. L'homme du métier appréciera que l'invention s'applique à des configurations dans lesquelles la zone de recouvrement peut être nulle ou, au contraire, intégrale entre deux ou plusieurs cellules. Comme nous allons le voir plus en détail dans la suite, ce paramètre caractéristique est d'ailleurs en lien direct avec l'objectif de régulation de la puissance d'émission des stations de base du système de radiocommunication mobile. En particulier, cette zone de recouvrement 107 est susceptible d'être le siège d'interférences pouvant perturber les communications radio respectivement établies par les stations de base 104 et 110. Notamment, lorsque le spectre de fréquence utilisé par les deux stations de base pour leurs communications radio est identique, les signaux radio émis par l'une des stations de base s'apparentent à du bruit en-bande vis-à-vis des signaux émis par l'autre station de base.

Un autre exemple enfin de paramètre caractéristique du système de radiocommunication mobile est la puissance d'émissionP_{eNB1} et/ou P_{eNB2} de la station de base 104 de la structure mobile 101 et/ou de la station de base 110 de la structure mobile 112, respectivement. Ce paramètre peut être déterminé de plusieurs façons différentes dès lors que la structure mobile 112 se situe dans l'environnement immédiat de la structure mobile 101 (et donc de ses équipements). Par environnement immédiat, on entend une zone comprise à une distance permettant l'établissement de tout type de liaison de communication radio (en mode direct ou non) entre un équipement d'une structure mobile et celui de l'autre structure mobile.

Ainsi, dans une telle configuration, les stations de base 104 et 110 peuvent établir une liaison IP (pour « Internet Protocol ») via une interface X2, telle que définie par la norme LTE du consortium 3GPP, prévue pour relier entre-elles une pluralité de station de base distinctes. En outre, avantageusement, la norme prévoit aussi une fonction ANR (de l'anglais «*Automatic Neighbour Relation* ») qui permet aux terminaux de communication mobiles des cellules des stations de base ainsi reliées, de déterminer la puissance d'émission de stations de base concernées. Un ou plusieurs des terminaux de communication mobile 107 et 108 peut donc déterminer les puissances d'émission P_{eNB1} et P_{eNB2} des stations mobiles 104 et 110 et les transmettre à la station de base 104.

Dans un autre mode de réalisation, et en particulier dans le cas ou aucune liaison de communication radio n'est établie entre les deux structures mobiles, la puissance d'émission des stations de base 104 et 110 peut être déterminée par un dispositif de type scanner radio intégré à l'une au l'autre des structures mobiles et adapté pour mesurer la puissance d'émission d'une station de base d'un autre structure mobile située dans son environnement immédiat. Un tel scanner radio, intégré à au moins une structure mobile, peut ensuite transmettre cette information à la station de base 104.

Quel que soit le ou les paramètres caractéristiques du système de radiocommunication mobile associées à l'information reçue par une station de base d'une structure mobile, l'invention consiste en la capacité de ladite station de base à modifier sa puissance d'émission sur la base de cette information associée. En particulier, la puissance d'émission des stations de base d'un système de radiocommunication mobile doit être régulée pour optimiser la dimension de la zone de recouvrement entre les différentes zones de couverture radio impliquées. L'optimisation peut consister à trouver un compromis permettant de minimiser les risques d'interférence entre plusieurs zones de couverture radio tout en conservant la possibilité d'établir des liaisons de communication cellulaire sur des distances les plus grandes possibles ainsi que, le cas échéant, d'autres type de liaisons reliant entre eux des équipements de structures mobiles distinctes.

Par exemple une telle modification peut consister en une augmentation de la puissance d'émission de la station de base 104 de manière à obtenir une étendue déterminée de la zone de recouvrement 107 qui demeure constante lorsque le distance entre les structures mobiles 101 et 112 augmente. Typiquement, on peut viser une étendue faible mais non nulle de manière à ce que tout l'espace qui sépare les structures mobiles 101 et 112 soit couvert par les zones de couverture radio 105 et 109 tout en minimisant la zone dans laquelle se produisent des interférences. De manière réciproque, un autre exemple consiste à diminuer la puissance d'émission de la station de base 104, de manière à obtenir une étendue déterminée de la zone de recouvrement 107 qui demeure constante lorsque la distance entre les structures mobiles 101 et 112 diminue.

Avantageusement, l'utilisation de tous les paramètres caractéristiques du système de radiocommunication mobile permet de s'appuyer sur un grand nombre d'information pour réguler la puissance d'émission des stations et optimiser la couverture tout en minimisant les interférences. En outre, une information peut compléter ou se substituer à une autre dès lors que celle-ci n'est pas déterminée ou pas déterminable.

En référence à la **figure 2**, nous allons maintenant décrire un mode de mise en œuvre d'un procédé de régulation de la puissance d'émission d'une station de base selon l'invention. Le procédé est exécuté dans une station de base d'une structure mobile conforme à celle qui a été décrit en référence à la figure 1. En outre, le procédé est exécuté de manière continue et permet ainsi, à chaque nouveau changement d'un paramètre caractéristique d'un système de radiocommunication mobile formé par plusieurs structures mobiles, d'adapter la puissance d'émission des stations de base desdites structures mobiles pour tenir compte de la configuration concrète dudit système de radiocommunication mobile. Par exemple, lorsqu'une nouvelle liaison de communication est établie ou lorsque la distance entre les structures mobile du système varie sensiblement.

Ainsi, lors de l'étape 201, la station de base d'une structure mobile telle qu'elle a été décrite en référence à la figure 1, reçoit une information associée à au moins un paramètre caractéristique du système de radiocommunication mobile. Ensuite, lors de l'étape 202, la station de base modifie sa puissance d'émission sur la base de l'information associée à un paramètre caractéristique qu'elle vient de recevoir.

## Revendications

1. Station de base (104) d'une structure mobile (101) d'un système de radiocommunication mobile (115), ladite station de base étant adaptée pour établir des liaisons de communication cellulaire avec des terminaux de communication mobiles (106) de la structure mobile via une interface radio déterminée,
ladite structure mobile comprenant en outre une entité de liaison (102) configurée pour établir au moins une liaison en mode direct (114) avec au moins une autre entité de liaison (113) d'une autre structure mobile (112) du système de radiocommunication mobile via une interface radio distincte de l'interface radio utilisée pour les liaisons de communication cellulaire de la station de base, et,
ladite station de base étant en outre configurée pour :
- recevoir une ou plusieurs informations dont au moins une information déterminée par l'entité de liaison et/ou par l'autre entité de liaison, ladite ou lesdites informations étant associées à au moins un paramètre caractéristique du système de radiocommunication mobile ; et,
- adapter sa puissance d'émission sur la base de l'information ou des informations reçues.

2. Station de base selon la revendication précédente, dans laquelle une information déterminée par l'entité de liaison et/ou par l'autre entité de liaison est comprise dans la liste suivante :
- une information représentative de la distance (d) entre la structure mobile à laquelle appartient la station de base et une autre structure mobile ;
- une information représentative de la puissance d'émission (P_{dUE1}) de l'entité de liaison de la structure mobile à laquelle appartient la station de base et la puissance d'émission (P_{dUE2}) d'une autre entité de liaison d'une autre structure mobile avec laquelle une liaison en mode direct est établie ;
- une information représentative de la puissance d'émission moyenne estimée (P_{moy}), adaptée pour obtenir une zone de recouvrement (107) d'étendue déterminée entre des zones de couverture radio respectives (105, 109) de la station de base de la structure mobile et d'une station de base d'une autre structure mobile avec laquelle une liaison en mode direct est établie ; et,
- une information représentative de la puissance d'émission (P_{eNB1})de la station de base de la structure mobile et la puissance d'émission (P_{eNB2}) d'une station de base d'une autre structure mobile située dans l'environnement immédiat de ladite station de base de la structure mobile.

3. Station de base selon la revendication 2, dans laquelle l'information représentative de la distance entre la structure mobile à laquelle appartient la station de base et une autre structure mobile est déterminée par l'entité de liaison de la structure mobile sur la base du temps de déplacement du signal aller-retour (en anglais « *Round Trip Time* », RTT), mesuré entre les entités de liaison respectives de la structure mobile et de l'autre structure mobile, et est transmise à la station de base de la structure mobile par ladite entité de liaison.

4. Station de base selon la revendication 2, dans laquelle l'information représentative de la puissance d'émission de l'entité de liaison de la structure mobile à laquelle appartient la station de base et la puissance d'émission d'une autre entité de liaison d'une autre structure mobile avec laquelle une liaison en mode direct est établie, est déterminée par l'entité de liaison de la structure mobile, et est transmise à la station de base de la structure mobile par ladite entité de liaison.

5. Station de base selon la revendication 2, dans laquelle l'information représentative de la puissance d'émission moyenne estimée, adaptée pour obtenir une zone de recouvrement d'étendue déterminée entre les zones de couverture radio respectives de la station de base de la structure mobile et d'une station de base d'une autre structure mobile avec laquelle une liaison en mode direct est établie, inférieure à une dimension déterminée, est déterminée par l'entité de liaison de la structure mobile, et est transmise à la station de base de la structure mobile par ladite entité de liaison.

6. Station de base selon la revendication 2, dans laquelle, lorsqu'une liaison IP est établie via une interface X2 entre la station de base de la structure mobile et une autre station de base d'une autre structure mobile située dans son environnement immédiat, l'information représentative de la puissance d'émission des stations de base respectives de chacune des deux structures mobiles est déterminée par au moins un terminal de communication mobile de la structure mobile et transmise à la station de base de la structure mobile par ledit terminal de communication mobile.

7. Station de base selon la revendication 2, dans laquelle, l'information représentative de la puissance d'émission de la station de base et la puissance d'émission d'une autre station de base située dans son environnement immédiat sont déterminées par un dispositif de type scanner radio intégré à la structure mobile et transmise à la station de base de la structure mobile par ledit dispositif de type scanner radio.

8. Station de base selon l'une quelconque des revendications précédentes dans laquelle une modification de la puissance d'émission de ladite station de base sur la base d'une information associée à au moins un paramètre caractéristique du système de radiocommunication mobile est comprise parmi :
- une augmentation de la puissance d'émission de la station de base adaptée pour obtenir une étendue déterminée d'une zone de recouvrement entre les zones de couverture radio respectives de la station de base de la structure mobile et de la station de base de l'autre structure mobile située dans son environnement immédiat lorsque la distance comprise entre les deux structures mobiles augmente.
- une diminution de la puissance d'émission de la station de base adaptée pour obtenir une étendue déterminée d'une zone de recouvrement entre des zones de couverture radio respectives de la station de base de la structure mobile et d'une autre station de base d'une autre structure mobile située dans son environnement immédiat lorsque la distance comprise entre les deux structures mobiles diminue.

9. Station de base selon l'une quelconque des revendications précédentes dans laquelle une entité de liaison d'une structure mobile comprend des ressources logicielles mises en œuvre dans la station de base de ladite structure mobile, ainsi que des ressources matérielles de ladite station de base.

10. Procédé de régulation de la puissance d'émission d'une station de base d'une structure mobile d'un système de radiocommunication mobile, ladite station de base étant adaptée pour établir des liaisons de communication cellulaire avec des terminaux de communication mobiles de la structure mobile via une interface radio déterminée,
ladite structure mobile comprenant en outre une entité de liaison configurée pour établir au moins une liaison en mode direct avec au moins une autre entité de liaison d'une autre structure mobile du système de radiocommunication mobile via une interface radio distincte de l'interface radio utilisée pour les liaisons de communication cellulaire de la station de base,
ledit procédé comprenant les étapes de :
- réception (201), par la station de base de la structure mobile, d'une ou plusieurs informations associées dont au moins une information déterminée par l'entité de liaison et/ou par l'autre entité de liaison, ladite ou lesdites informations étant associées à au moins un paramètre caractéristique du système de radiocommunication mobile ; et,
- modification (202), par la station de base de la structure mobile, de sa puissance d'émission sur la base de l'information ou des informations reçues.

11. Système de radiocommunication mobile (115) comportant une station de base (104) d'une structure mobile (101), ladite station de base (104) étant adaptée pour établir des liaisons de communication cellulaire avec des terminaux de communication mobiles (106) de la structure mobile via une interface radio déterminée,
ladite structure mobile comprenant en outre une entité de liaison (102) configurée pour établir au moins une liaison en mode direct (114) avec au moins une autre entité de liaison (113) d'une autre structure mobile (112) du système de radiocommunication mobile via une interface radio distincte de l'interface radio utilisée pour les liaisons de communication cellulaire de la station de base, et,
ladite station de base étant en outre configurée pour :
- recevoir une ou plusieurs informations dont au moins une information déterminée par l'entité de liaison et/ou par l'autre entité de liaison, ladite ou lesdites informations étant associées à au moins un paramètre caractéristique du système de radiocommunication mobile ; et,
- adapter sa puissance d'émission sur la base de l'information ou des informations reçues.

12. Système de radiocommunication mobile (115) selon la revendication précédente, dans lequel une information déterminée par l'entité de liaison et/ou par l'autre entité de liaison est comprise dans la liste suivante :
- une information représentative de la distance (d) entre la structure mobile à laquelle appartient la station de base et une autre structure mobile ;
- une information représentative de la puissance d'émission (P_{dUE1}) de l'entité de liaison de la structure mobile à laquelle appartient la station de base et la puissance d'émission (P_{dUE2}) d'une autre entité de liaison d'une autre structure mobile avec laquelle une liaison en mode direct est établie ;
- une information représentative de la puissance d'émission moyenne estimée (P_{moy}), adaptée pour obtenir une zone de recouvrement (107) d'étendue déterminée entre des zones de couverture radio respectives (105, 109) de la station de base de la structure mobile et d'une station de base d'une autre structure mobile avec laquelle une liaison en mode direct est établie ; et,
- une information représentative de la puissance d'émission (P_{eNB1})de la station de base de la structure mobile et la puissance d'émission (P_{eNB2}) d'une station de base d'une autre structure mobile située dans l'environnement immédiat de ladite station de base de la structure mobile.

13. Système de radiocommunication mobile (115) selon la revendication précédente, dans lequel l'information représentative de la distance entre la structure mobile à laquelle appartient la station de base et une autre structure mobile est déterminée par l'entité de liaison de la structure mobile sur la base du temps de déplacement du signal aller-retour (en anglais « *Round Trip Time »,* RTT), mesuré entre les entités de liaison respectives de la structure mobile et de l'autre structure mobile, et est transmise à la station de base de la structure mobile par ladite entité de liaison.

14. Système de radiocommunication mobile (115) selon la revendication 12, dans lequel, lorsqu'une liaison IP est établie via une interface X2 entre la station de base de la structure mobile et une autre station de base d'une autre structure mobile située dans son environnement immédiat, l'information représentative de la puissance d'émission des stations de base respectives de chacune des deux structures mobiles est déterminée par au moins un terminal de communication mobile de la structure mobile et transmise à la station de base de la structure mobile par ledit terminal de communication mobile.

15. Système de radiocommunication mobile (115) selon la revendication 12, dans lequel l'information représentative de la puissance d'émission moyenne estimée, adaptée pour obtenir une zone de recouvrement d'étendue déterminée entre les zones de couverture radio respectives de la station de base de la structure mobile et d'une station de base d'une autre structure mobile avec laquelle une liaison en mode direct est établie, inférieure à une dimension déterminée, est déterminée par l'entité de liaison de la structure mobile, et est transmise à la station de base de la structure mobile par ladite entité de liaison.
